# EUROPEAN PATENT SPECIFICATION

(11) **EP 1 689 035 B1**
(45) Date of publication and mention of the grant of the patent: **18.06.2008**
(21) Application number: 06002192.0
(22) Date of filing: 02.02.2006
(51) Int. Cl.: H01R 13/422

(54) **A terminal fitting and method of forming it**
Anschlusskontakt und Verfahren zur Herstellung
Contact à borne et procédé de fabrication

(30) Priority: 02.02.2005 JP 2005026660
(43) Date of publication of application: 09.08.2006
(73) Proprietor: Sumitomo Wiring Systems, Ltd., Yokkaichi-City, Mie, 510-8503 (JP)
(72) Inventor: Kobayashi, Yutaka c/o Sumitomo Wiring Systems, Ltd., Yokkaichi-City, Mie 510-8503 (JP); Kawase, Hajime c/o Sumitomo Wiring Systems, Ltd., Yokkaichi-City, Mie 510-8503 (JP); Noro, Yutaka c/o Sumitomo Wiring Systems, Ltd., Yokkaichi-City, Mie 510-8503 (JP)
(74) Representative: Müller-Boré & Partner Patentanwälte

(56) References cited:
- EP-A- 1 294 057
- US-A1- 2003 096 533

## Description

The present invention relates to a terminal fitting and to a method of forming it.

A terminal fitting is known from Japanese Unexamined Patent Publication No. H04-115475. This terminal fitting includes a rectangular tube portion having a locking hole formed in one of plate portions forming the rectangular tube portion, and is insertable into a cavity of a connector housing. The inserted terminal fitting is retained by the engagement of the locking hole with a resiliently deformable locking portion provided at an inner wall of the cavity.

In a terminal fitting of this kind, it may be thought to form a locking wall by bending an edge portion of a locking hole substantially at right angle inwardly of a rectangular tube portion, thereby increasing an engaging margin with the locking portion. According to such a construction, the reliability of a locking function, i.e. retaining function can be improved as compared to a case where the thickness of the plate portion serves as an engaging margin.

However, in the terminal fitting formed with such a locking wall by bending, a boundary between a bent portion of the locking wall, i.e. a contact surface of the locking wall with the locking portion and the outer surface of the plate portion is in the form of a curved surface. Thus, when an external force acts on the terminal fitting in withdrawing direction, slippage occurs between the locking wall and the locking portion, with the result that the locking portion may be resiliently deformed in such a direction as to be disengaged from the locking wall.
EP-A-1 294 057 describes a terminal fitting with an engaging recess comprising projecting holding pieces. US-2003/096533 A1 describes a terminal fitting with a locking hole with a bulging lip.

The present invention was developed in view of the above problem, and an object thereof is to improve the reliability of a retaining function by the engagement of a locking portion and a locking hole.

This object is solved according to the invention by the features of the independent claims. Preferred embodiments of the invention are subject of the dependent claims.

According to the invention, there is provided a terminal fitting to be at least partly inserted into a cavity of a connector housing so as to be held therein by an engagement with a locking portion thereof, comprising
a tube portion, preferably having a substantially rectangular or polygonal shape,and
a locking hole formed in or at a surface of the tube portion, an opening edge or edge portion of the locking hole serving as or forming part of a retaining portion to be engaged with the locking portion,
wherein the retaining portion is formed by deforming (preferably bending or embossing) the opening edge of the locking hole formed in the surface such that at least part of an end surface of the surface serving as the opening edge of the locking hole is displaced inwardly of the tube portion.

At the retaining portion, the end surface of the plate portion serving as the opening edge of the locking hole can come substantially into contact with the locking portion to retain the terminal fitting. Since the part of the end surface is displaced inwardly of the tube portion, a larger engaging margin is ensured as compared to a case where substantially only the thickness of the plate portion serves as an engaging margin with the locking portion.

According to a preferred embodiment of the invention, the at least part of an end surface of the surface serving as the opening edge of the locking hole is held faced substantially in such a direction as to be opposed to the locking portion.

Accordingly, the retaining portion is formed such that the part of the end surface of the plate portion is displaced while being held substantially faced in such a direction as to be opposed to the locking portion, and a boundary between the outer surface of the plate portion and the end surface is in the form of an edge-shaped angled portion. Thus, even if an external force acts on the terminal fitting in withdrawing direction, preferably there is no or only little likelihood that the locking portion slips to be disengaged from the retaining portion as in the case where the boundary between the outer surface of the plate portion and the end surface is in the form of a curved surface.

According to a further preferred embodiment of the invention, there is provided a terminal fitting, comprising
a rectangular tube portion, and
a locking hole formed in a plate portion forming the rectangular tube portion, an opening edge of the locking hole serving as a retaining portion,
the terminal fitting inserted into a cavity of a connector housing being retained by the engagement of the retaining portion with a resiliently deformable locking portion provided at an inner wall of the cavity,
wherein the retaining portion is formed by deforming the opening edge of the locking hole formed in the plate portion such that part of an end surface of the plate portion serving as the opening edge of the locking hole is displaced inwardly of the rectangular tube portion while being held faced in such a direction as to be opposed to the locking portion.

At the retaining portion, the end surface of the plate portion serving as the opening edge of the locking hole comes into contact with the locking portion to retain the terminal fitting. Since the part of the end surface is displaced inwardly of the rectangular tube portion, a larger engaging margin is ensured as compared to a case where only the thickness of the plate portion serves as an engaging margin with the locking portion. The retaining portion is formed such that the part of the end surface of the plate portion is displaced while being held faced in such a direction as to be opposed to the locking portion, and a boundary between the outer surface of the plate portion and the end surface is in the form of an edge-shaped angled portion. Thus, even if an external force acts on the terminal fitting in withdrawing direction, there is no likelihood that the locking portion slips to be disengaged from the retaining portion as in the case where the boundary between the outer surface of the plate portion and the end surface is in the form of a curved surface.

Preferably, at least one resilient contact piece is at least partly accommodated in the tube portion, and
the resilient contact piece can come substantially into contact with the retaining portion to prevent an excessive deformation of the resilient contact piece close to or beyond a resiliency limit preferably if a degree of resilient deformation of the resilient contact piece becomes larger than the one when the resilient contact piece is held in contact with a tab.

Further preferably, the tab is to be resiliently held between the resilient contact piece and a surface of the tube portion substantially opposite to the surface formed with the locking hole.

Most preferably, a resilient contact piece is accommodated in the rectangular tube portion,
a tab is resiliently held between the resilient contact piece and a plate portion of the rectangular tube portion opposite to the one formed with the locking hole, and
the resilient contact piece comes into contact with the retaining portion to prevent an excessive deformation of the resilient contact piece beyond a resiliency limit if a degree of resilient deformation of the resilient contact piece becomes larger than the one when the resilient contact piece is held in contact with the tab.

The retaining portion also has an excessive deformation preventing function of preventing an excessive resilient deformation of the resilient contact piece beyond the resiliency limit by being brought into contact with the resilient contact piece when the degree of resilient deformation of the resilient contact piece becomes larger than the one when the resilient contact piece is held in contact with the tab. Accordingly, the shape of the terminal fitting can be simplified as compared to a case where an excessive deformation preventing portion for exclusive use is provided in addition to the retaining portion.

According to a further preferred embodiment of the invention, the widthwise center of the resilient contact piece substantially coincides with that of the retaining portion.

Preferably, one or more, preferably a pair of locking plates are provided on a surface of the tube portion so as to act as a displacement preventing portion for avoiding a displacement of the resilient contact portion in a direction at an angle different from 0° or 180°, preferably substantially normal to the deforming direction when coming into contact with the tab.

Further preferably, the widthwise center of resilient contact piece is deviated from that of the tube portion.

Still further preferably, an area of the tube portion adjacent and substantially corresponding to the locking hole is embossed or bent to project inward thereby forming an intrusion restricting portion being preferably located at least partly within the opening area of the locking hole.

Most preferably, the intrusion restricting portion is located outside a deformation space for the resilient contact piece with respect to width direction.

According to the invention, there is further provided a method of forming or shaping a terminal fitting, in particular according to the invention or a preferred embodiment thereof, which is to be at least partly inserted into a cavity of a connector housing so as to be held therein by an engagement with a locking portion thereof, comprising the following steps:
stamping or cutting out a plate material into a specified shape such that a locking hole is formed in a surface of a tube portion, an opening edge of the locking hole serving as a retaining portion to be engaged with the locking portion,
wherein the retaining portion is formed by deforming (preferably by bending or embossing) the opening edge of the locking hole formed in the surface such that at least part of an end surface of the surface serving as the opening edge of the locking hole is displaced inwardly of the tube portion.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a right side view of a terminal fitting according to one embodiment of the invention,
FIG. 2 is a plan view of the terminal fitting,
FIG. 3 is a left side view of the terminal fitting,
FIG. 4 is a bottom view of the terminal fitting,
FIG. 5 is a section along A-A of FIG. 2,
FIG. 6 is a section along B-B of FIG. 5,
FIG. 7 is a section along C-C of FIG. 5,
FIG. 8 is a section along D-D of FIG. 5,
FIG. 9 is a section along E-E of FIG. 5,
FIG. 10 is a development of the terminal fitting,
FIG. 11 is a front view of the terminal fitting, and
FIG. 12 is a section showing a state where a tab is connected with the terminal fitting.

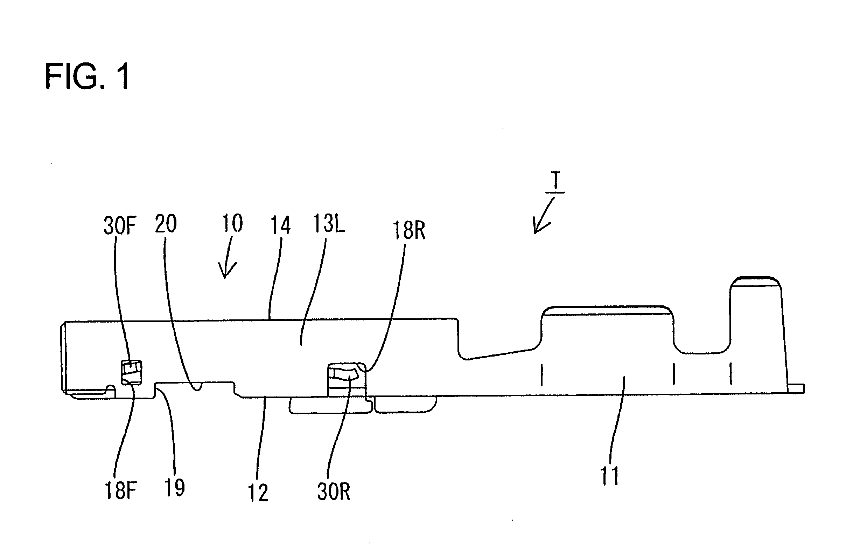

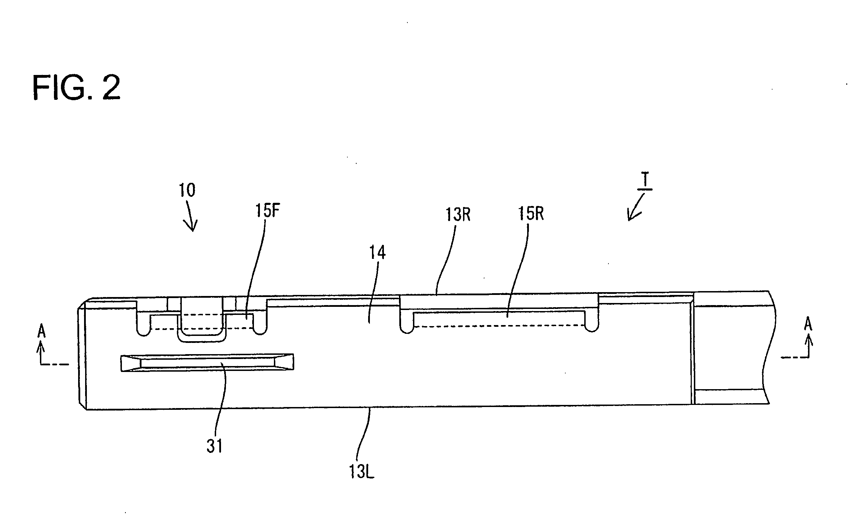

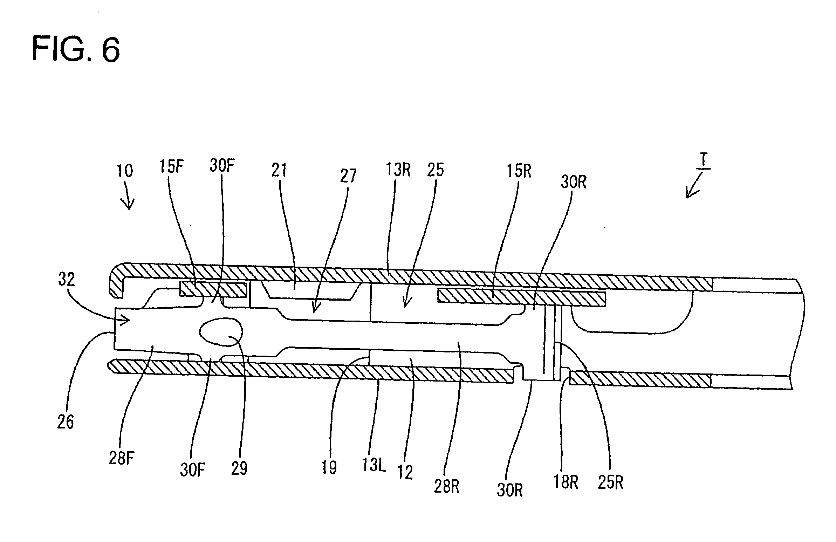

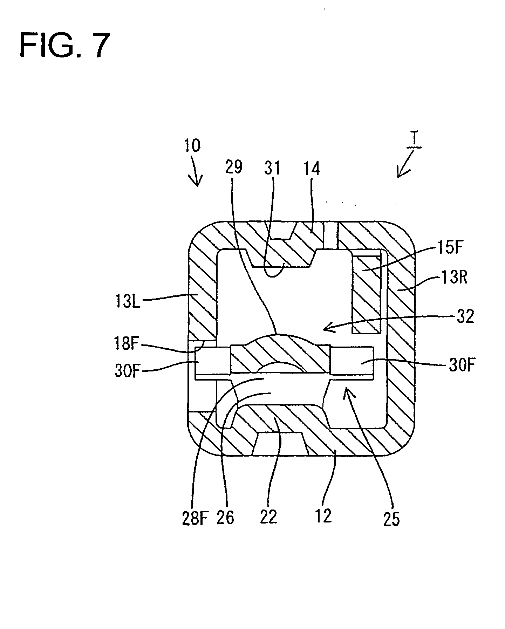

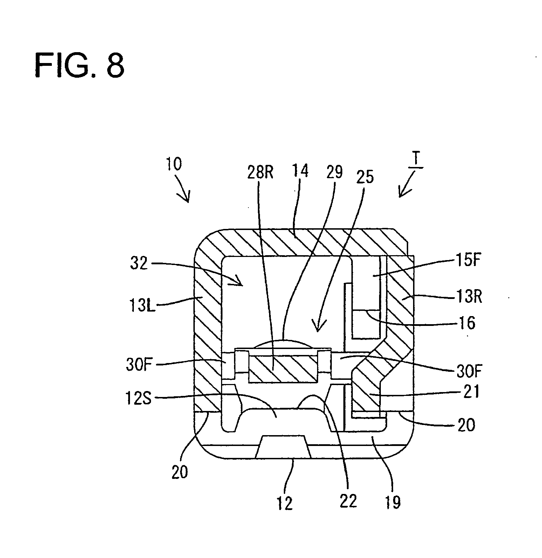

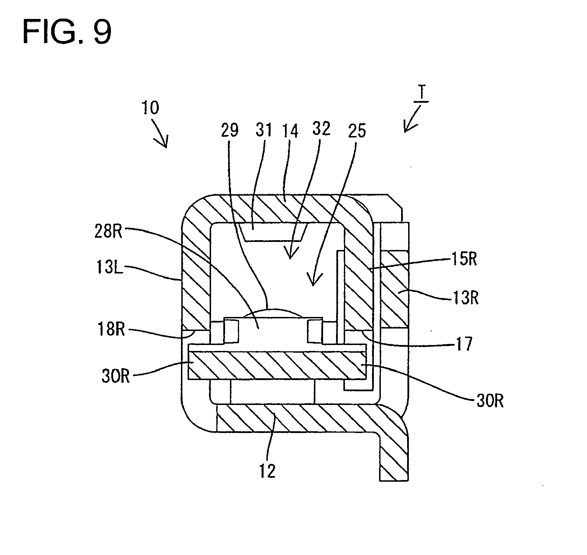

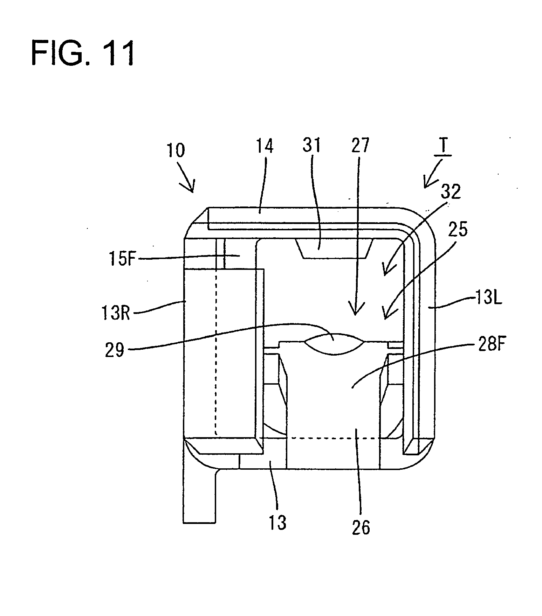

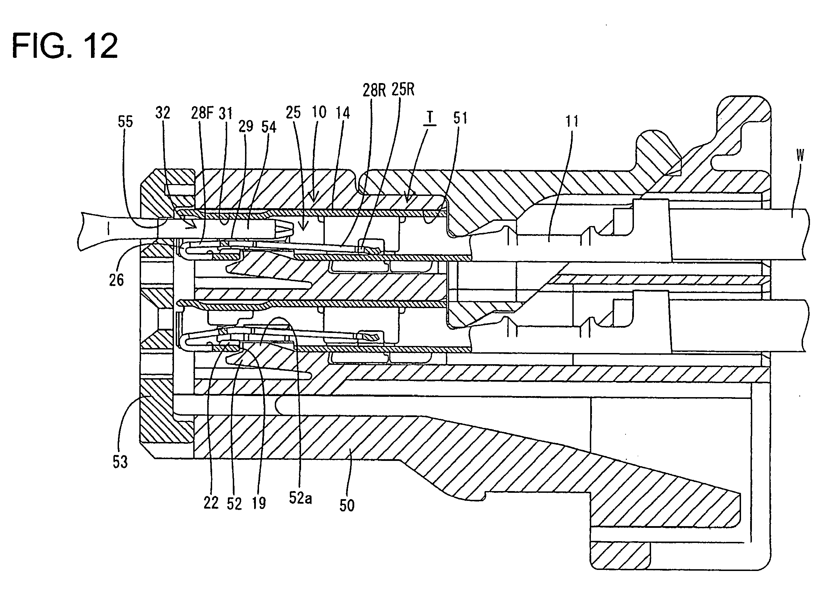

One preferred embodiment of the present invention is described with reference to FIGS. 1 to 12. First, a connector housing 50 into which one or more terminal fittings T of a preferred embodiment of the present invention are to be at least partly accommodated is described. The connector housing 50 is made e.g. of a synthetic resin, and one or more, preferably a plurality of cavities 51 are formed to penetrate the connector housing 50 substantially in forward and backward directions, wherein a (preferably cantilever-shaped) locking portion 52 projecting substantially forward along or at the bottom wall of each cavity 51 and having a retaining projection 52a on the inner (upper) surface (surface substantially facing the cavity 51) thereof is formed in each cavity 51. A front plate 53 is mounted on the front surface of the connector housing 50, and one or more tabs 54 of male terminal fittings mounted in an unillustrated mating connector are at least partly inserted from front into the cavities 51 through tab insertion openings 55 formed in the front plate 53.

Next, the terminal fitting T is described.

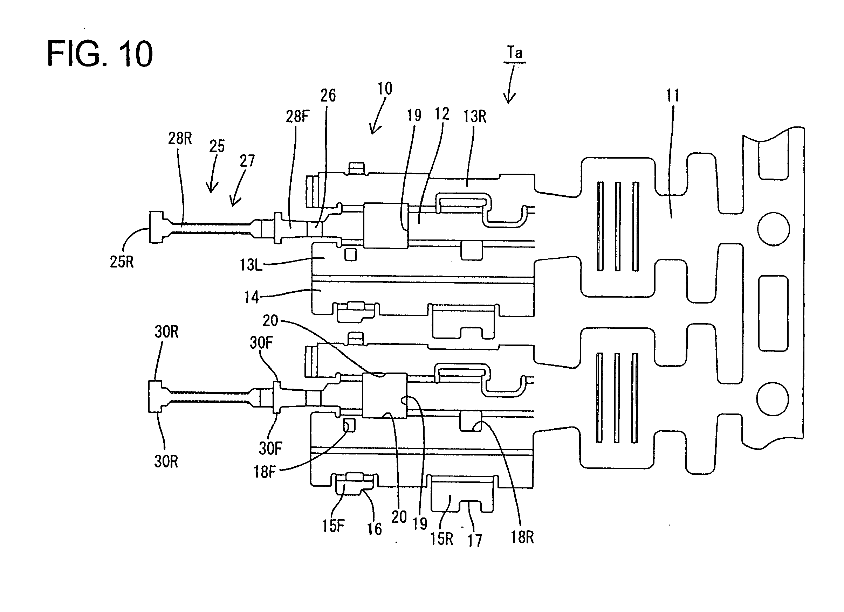

Each terminal fitting T is formed from a conductive (preferably metallic) plate material Ta stamped or cut out into a specified (predetermined or predeterminable) shape as shown in FIG. 10 by applying bending, folding, pressing, embossing, etc. and is substantially narrow and long in forward and backward directions as a whole, wherein a front portion (preferably a substantially front half) serves as a (preferably substantially rectangular or polygonal) tube portion 10 and a rear portion (preferably a substantially rear half) serves as a wire connecting portion 11 (preferably in the form of or comprising one or more open barrels) to be connected with a wire W. The wire connecting portion 11 is connected, preferably crimped or bent or folded into electrical connection, with an end (front end) of the wire W.

The (preferably rectangular or polygonal) tube portion 10 is formed to be substantially hollow in forward and backward directions by a bottom or base plate 12 preferably substantially narrow and long in forward and backward directions, a pair of side plates 13L, 13R standing substantially upright or projecting from front areas (preferably substantially front half areas) of the opposite lateral (left and/or right) edges of the bottom plate 12, and a ceiling or top plate 14 preferably extending from (preferably the entire upper edge of) the one lateral (left) side plate 13L toward the other lateral (right) side plate 13R preferably substantially in parallel with the bottom plate 12. Front part, rear part and middle part of the extending end (right edge) of the ceiling plate 14 are in contact with the upper edge of the right side plate 13R from above, and one or more, preferably two (front and/or rear) locking plates 15F, 15R extending downward or substantially towards the resilient contact piece 25 along (to at least partly overlap) the inner surface of the right side plate 13R are formed in two front and/or rear areas of the extending end of the ceiling plate 14 preferably substantially not in contact with the upper edge of the right side plate 13R. The front locking plate 15F preferably is substantially rectangular as a whole, the bottom edge thereof is located at an intermediate position (preferably substantially in the middle) of the (rectangular) tube portion 10 with respect to height direction, and a rear notch 16 is formed at the rear end of this bottom edge. The rear locking plate 15R preferably is substantially rectangular as a whole, and the bottom edge thereof is located at a low position (position near the bottom plate 12) in the rectangular tube portion 10, and a bottom notch 17 is formed in an intermediate position (preferably substantially in the middle) of the bottom edge with respect to forward and backward directions. On the other hand, a substantially rectangular front locking hole 18F substantially corresponding to the bottom edge of the front locking plate 15F and a (preferably substantially rectangular) rear locking hole 18R substantially corresponding to the bottom notch 17 of the rear locking plate 15R are formed to penetrate the left side plate 13L.

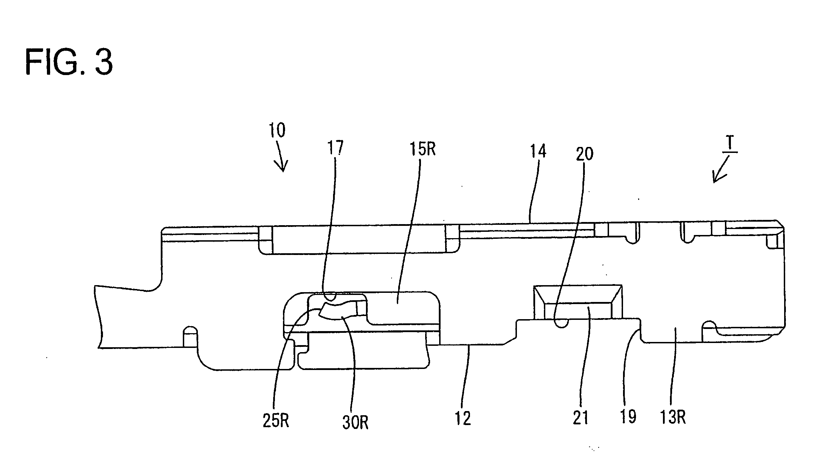

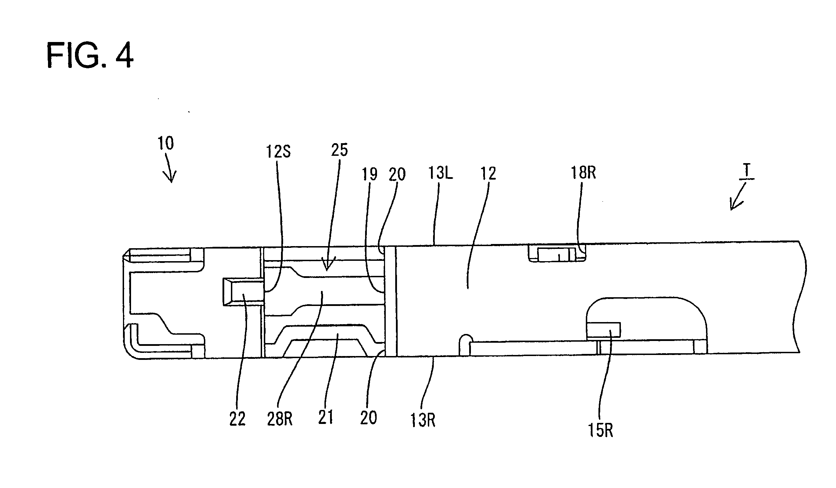

A (preferably substantially rectangular) locking hole 19 is formed in one of the plates 12, 13 and/or 14, preferably the bottom or base plate 12 (as a preferred plate portion at a side of a resilient contact piece 25 substantially opposite to the tab entrance space 32). The bottom edges of the lateral (left and right) side plates 13L, 13R preferably are cut up to a position slightly higher than the upper surface of the bottom plate 12 in areas corresponding to the locking hole 19 with respect to forward and backward directions, thereby transversely symmetrically forming side notches 20. By preferably forming the side notches 20, the bottom edges (bottom end surfaces) of the lateral (left and right) side plates 13L, 13R are located in or corresponding to an opening area of the locking hole 19. An area of the bottom part of the lateral (right) side plate 13R substantially corresponding to the locking hole 19 preferably is embossed or bent to project inward (toward the widthwise center), thereby forming an intrusion restricting portion 21. The intrusion restricting portion 21 preferably is substantially rectangular in side view (see e.g. FIG. 3) and/or is trapezoidal in bottom view (see e.g. FIG. 4). It should be noted that the rear notch 16 of the front locking plate 15F preferably is formed to avoid the interference with the front end of the upper edge of the intrusion restricting portion 21.

A retaining portion 22 engageable with the retaining projection 52a of the locking portion 52 is formed at or close to the front edge of the locking hole 19. The retaining portion 22 preferably is formed by plastically deforming the opening edge of the locking hole 19 in the bottom or base plate 12 preferably by stamping or by embossing so as to be displaced inwardly of the (preferably rectangular) tube portion 10 (upward) with part of an end surface 12S constituting the opening edge of the locking hole 19 held faced in such a direction as to be opposed to the retaining projection 52a (faced backward). The retaining portion 22 is arranged at a position displaced laterally (e.g. to left) along width direction (transverse direction) relative to the (rectangular) tube portion 10, wherein the widthwise center of the retaining portion 22 preferably is located at the substantially same position as that of the resilient contact piece 25 to be described later. Further, the upper or inner surface of the retaining portion 22 preferably is a substantially flat surface located substantially at the same height as the bottom edges of the side notches 20 and/or the intrusion restricting portion 21.

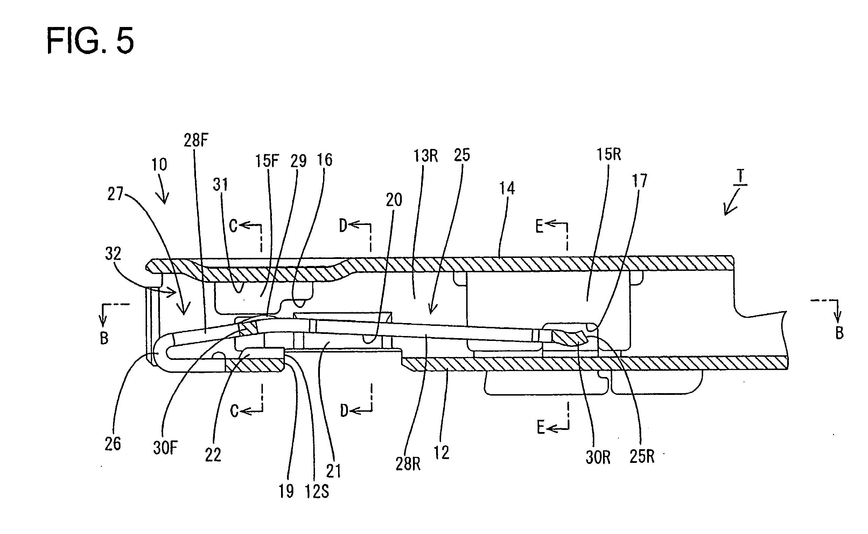

The resilient contact piece 25 is at least partly accommodated in the rectangular tube portion 10. As shown in FIG. 5, the resilient contact piece 25 is bent or folded back at the front end of the bottom or base plate 12, preferably cantilevers backward and is narrow and long substantially in forward and backward directions. The resilient contact piece 25 preferably is comprised of a substantially semicircular bent portion 26 connected with the front end of the bottom plate 12, and an extending portion 27 extending substantially backward from the bent portion 26. The extending portion 27 has a forward inclined portion 28F extending obliquely upward or inward to the back from the upper end of the bent portion 26 and a backward inclined portion 28R extending obliquely downward or outward to the back from the rear end (extending end) of the forward inclined portion 28F. In a free state where the resilient contact piece 25 is not resiliently deformed, the resilient contact piece 25 is supported preferably only at its front end since a free end 25R of the resilient contact piece 25 (rear end of the backward inclined portion 28R) preferably is located at a noncontact position distanced upward or inward from the bottom or base plate 12. The resilient contact piece 25 is resiliently deformable substantially laterally (upward and downward) or in a direction intersecting the forward and backward directions at least with the bent portion 26 as a supporting point while mainly resiliently deforming the bent portion 26. When the resilient contact piece 25 is resiliently deformed outward or downward, the free end 25R of the resilient contact piece 25 (rear end of the backward inclined portion 28R) comes or may come substantially into contact with the upper surface of the bottom plate 12, whereby the resilient contact piece 25 preferably is supported at both front and rear ends.

The bent portion 26 and the forward inclined portion 28F are located in an area before the locking hole 19, and a (preferably substantially dome-shaped) contact point 29 projecting upward or inward is formed at the rear end (i.e. highest part) of the front forward portion 28F. This contact point 29 preferably is also located before the locking hole 19. The backward inclined portion 28R extends in an area from the front edge of the locking hole 19 to the bottom notch 17 of the rear locking plate 15R, and the front end thereof is located at such a height substantially corresponding to the intrusion restricting portion 21. Further, concerning the width of the resilient contact piece 25, the widths of the bent portion 26 and the forward inclined portion 28F preferably are substantially equal; the widths of the front and rear ends of the backward inclined portion 28R preferably are substantially equal to that of the forward inclined portion 28F; and/or an area of the backward inclined portion 28R except the front and rear ends thereof preferably is narrower than the forward inclined portion 28F.

One or more, preferably a pair of front and rear projections 30F, 30R are so formed at (preferably each of) the lateral (left and/or right) edges of the resilient contact piece 25 as to be substantially flush with the resilient contact piece 25 and bulge outward along width direction. The lateral (left and right) front projections 30F preferably are substantially symmetrical to each other and arranged near the contact point 29, i.e. slightly before the contact point 29. The front projections 30F are so located as to substantially correspond to the bottom edge of the front locking plate 15F and the front locking hole 18F with respect to forward and backward directions. In the free state where the resilient contact piece 25 is not resiliently deformed, the upper surface of the right front projection 30F is located slightly below the bottom edge of the front locking plate 15F and substantially not in contact with this bottom edge, and the upper surface of the left front projection 30F preferably is located slightly below the upper edge of the front locking hole 18F and substantially not in contact with this upper edge. On the other hand, the rear projections 30R substantially are transversely symmetrical and arranged at or close to the free end 25R (rear end) of the resilient contact piece 25. The rear projections 30R preferably are so located as to substantially correspond to the upper edge of the bottom notch 17 of the rear locking plate 15R and the rear locking hole 18R with respect to forward and backward directions. In the free state where the resilient contact piece 25 is not resiliently deformed, the upper surface of the right rear projection 30R preferably is located slightly below the upper edge of the bottom notch 17 and substantially not in contact with this upper edge, and the upper surface of the left rear projection 30R preferably is located slightly below the upper edge of the rear locking hole 18R and substantially not in contact with this upper edge.

Such a resilient contact piece 25 preferably substantially is transversely symmetrical and displaced laterally (to left) along width direction relative to the (rectangular) tube portion 10 and the locking hole 19. The widthwise center of the resilient contact piece 25 preferably substantially coincides with that of the retaining portion 22. When the locking hole 19 is viewed from below, a front-end area of the backward inclined portion 28R of the resilient contact piece 25 is exposed preferably over its substantially entire width. The ceiling plate 14 is embossed to project downward, thereby forming a tab receiving portion 31. The widthwise center of this tab receiving portion 31 preferably (also) substantially coincides with that of the resilient contact piece 25. A space between the upper surface of the resilient contact piece 25 and the lower surface of the tab receiving portion 31 serves as the tab entrance space 32 which the tab 54 inserted into the rectangular tube portion 10 from front enters.

Next, functions of this embodiment are described.

In the process of at least partly inserting the terminal fitting T into the cavity 51 of the connector housing 50 from an inserting side, preferably substantially from behind, the bottom plate 12 of the (preferably substantially rectangular or polygonal) tube portion 10 comes substantially into contact with the retaining projection 52a to resiliently deform the locking portion 52 outward or downward. When the terminal fitting T is at least partly inserted to a substantially proper position, the locking portion 52 is resiliently at least partly restored upward or inwardly to at least partly fit the retaining projection 52a into the locking hole 19 and the front surface of the retaining projection 52a is substantially engaged with the retaining portion 22 of the locking hole 19 from a withdrawing direction, preferably substantially from behind, with the result that the terminal fitting T is held retained. The tab 54 having at least partly entered the tab entrance space 32 through the tab insertion opening 55 formed in the front plate 53 from front is resiliently held between the tab receiving portion 31 and the contact point 29 while resiliently deforming the resilient contact piece 25, and the tab 54 and the (rectangular) tube portion 10 can be electrically connected by a resilient restoring force of the resilient contact piece 25.

This embodiment has following functions and effects.
(1) At the retaining portion 22, the end surface 12S constituting or forming part of the opening edge of the locking hole 19 formed in the bottom or base plate 12 is brought or bringable substantially into contact with the locking portion 52 to retain the terminal fitting T. Since the part of the end surface 12S is displaced inwardly of the (rectangular) tube portion 10, a larger engaging margin can be ensured as compared to a case where only the thickness of the plate portion serves as an engaging margin.
(2) The retaining portion 22 preferably is displaced inwardly of the (rectangular) tube portion 10 while the part of the end surface 12S of the bottom plate 12 is held substantially faced in such a direction as to be substantially opposed to the locking portion 52, and a boundary between the outer surface (lower surface) of the bottom plate 12 and the end surface 12S preferably is substantially in the form of an edge-shaped angled portion. Thus, even if an external force acts on the terminal fitting T in withdrawing direction, there is no likelihood that the locking portion slips to be disengaged from the retaining portion as in the case where the boundary between the outer surface (lower surface) of the bottom plate and the end surface is in the form of a curved surface.
(3) If a degree of downward or outward resilient deformation of the resilient contact piece 25 becomes larger than the one in a normal contact state of the resilient contact piece 25 with the tab 54 when the tab 54 is at least partly inserted, a portion of the resilient contact piece 25 corresponding to the contact point 29 comes substantially into contact with the retaining portion 22 from above, thereby preventing the resilient contact piece 25 from being excessively resiliently deformed beyond its resiliency limit. Since the retaining portion 22 as means for retaining the terminal fitting T preferably also has an excessive deformation preventing function of preventing an excessive resilient deformation of the resilient contact piece 25 beyond or close to its resiliency limit, the shape of the terminal fitting T can be simplified as compared to a case where an excessive deformation preventing portion for exclusive use is provided in addition to the retaining portion.
(4) If an external matter having intruded through the locking hole 19 pushes the resilient contact piece 25 up or inwardly from outside or below, the front projections 30F preferably come substantially into contact with the bottom edge of the front locking plate 15F and the edge of the front locking hole 18F from below, and/or the rear projections 30R preferably come or can come substantially into contact with the bottom edge of the rear locking plate 15R and the edge of the rear locking hole 18R from below, thereby preventing the resilient contact piece 25 from being displaced toward the tab entrance space 32 (upward). Further, since the one or more locking plates 15F, 15R and/or the one or more locking holes 18F, 18R are arranged preferably at two positions before and/or behind the locking hole 19, there is no likelihood that the resilient contact piece 25 is inclined forward and/or backward upon receiving a pushing force from the external matter. This can prevent the bent portion 26 as the supporting point of resilient deformation of the resilient contact piece 25 from being plastically deformed.
(5) Since the front locking plate 15F and/or the front locking hole 18F located before the locking hole 19 preferably are arranged in the vicinity of the contact point 29 of the resilient contact piece 25 with the tab 54, even if an area of the resilient contact piece 25 except the supporting point of resilient deformation (bent portion 26) is deformed, there is no likelihood of changing the position of the contact point 29. Therefore, the resilient contact piece 25 can be brought into contact with the tab 54 substantially with a proper contact pressure.
(6) Since a rear displacement preventing portion (rear locking plate 15R and/or the rear locking hole 18R) located behind (or substantially opposite to a mating side with the mating terminal) the locking hole 19 preferably are arranged in the vicinity of the free end 25R of the resilient contact piece 25, an interval along forward and backward directions between a front displacement preventing portion (front locking plate 15F and/or front locking hole 18F) and the rear displacement preventing portion (rear locking plate 15R and/or rear locking hole 18R) is longer as compared to a case where the rear displacement preventing portion is arranged at a position closer to the supporting point of resilient deformation (front position) than to the free end. Accordingly, a degree of resilient deformation of the resilient contact piece 25 when the resilient contact piece 25 is deformed between the front and rear displacement preventing portions by being pressed by an external matter can be suppressed, and the resilient contact piece 25 is unlikely to undergo a plastic deformation between the front and rear displacement preventing portions.
(7) The bottom or base plate 12 preferably is formed with the locking hole 19 for exposing the resilient contact piece 25 to the outside of the (rectangular) tube portion 10, but the lateral (right) side plate 13R is formed with the intrusion restricting portion 21, close or adjacent to the resilient contact piece 25 and/or located at least partly within the opening area of the locking hole 19. Thus, the intrusion of an external matter through the locking hole 19 can be restricted by the intrusion restricting portion 21, which in turn prevents the interference of an external matter with the resilient contact piece 25.
(8) Since the intrusion restricting portion 21 preferably is located outside a deformation space for the resilient contact piece 25 with respect to width direction, the interference of the resilient contact piece 25 and the intrusion restricting portion 21 can be avoided. Accordingly, the contact reliability of the tab 54 and the resilient contact piece 25 can be ensured without hindering the resilient deformation of the resilient contact piece 25.
(9) The widthwise center of resilient contact piece 25 preferably is deviated from that of the preferably substantially rectangular tube portion 10. This means the presence of a dead space between the resilient contact piece 25 and the lateral (right) side plate 13R which is a side plate more distant from the resilient contact piece 25. Paying attention to this point, it is tried to effectively utilize the dead space in the rectangular tube portion 10 by arranging the intrusion restricting portion 21 in this dead space.
(10) Paying attention to the locking hole 19 formed preferably over the substantially entire width of the preferably substantially rectangular tube portion 10 and the exposure of the bottom end surfaces of the lateral (left and right) side plates 13L, 13R of the rectangular tube portion 10 in the opening area of the locking hole 19, the bottom end portion of the lateral (right) side plate 13R substantially facing the locking hole 19 is embossed to project inward, thereby forming the intrusion restricting portion 21. This forming method preferably by embossing or stamping is easily workable as compared to cutting and bending. Therefore, a processing cost can be reduced.

Accordingly, to improve the reliability of a retaining function realized by the engagement of a locking portion and a locking hole, at a retaining portion 22, an end surface 12S serving as an opening edge of the locking hole 19 formed in a bottom or base plate 12 comes or can come substantially into contact with a locking portion 52 to retain a terminal fitting T. Since at least part of the end surface 12S is displaced inwardly of a (preferably substantially rectangular or polygonal) tube portion 10, a larger engaging margin can be given as compared to a case where only the thickness of the bottom plate serves as an engaging margin. The retaining portion 22 may be displaced inwardly of the (rectangular/polygonal) tube portion 10 while the part of the end surface 12S of the bottom plate 12 is held faced substantially in such a direction as to be substantially opposed to the locking portion 52, and a boundary between the outer surface of the bottom plate 12 and the end surface 12S may not be not in the form of a curved surface, but in the form of a substantially edge-shaped or sharp-bent angle portion. Thus, even if an external force acts on the terminal fitting T in withdrawing direction, there is no likelihood that the locking portion 52 slips to be disengaged from the retaining portion 22.

### <Other Embodiments>

The present invention is not limited to the above described and illustrated embodiment. For example, the following embodiments are also embraced by the technical scope of the present invention as defined by the claims. Beside the following embodiments, various changes can be made without departing from the scope and spirit of the present invention as defined by the claims.
(1) Although the retaining portion is formed by embossing the widthwise middle part of the bottom plate in the foregoing embodiment, either one or both of the left and right edge portions of the bottom plate may be embossed according to the present invention.
(2) Although the retaining portion is formed by embossing in the foregoing embodiment, it may be formed by making a cut in the bottom plate and bending this cut portion according to the present invention.
(3) Although the widthwise (transverse) center of the resilient contact piece is deviated from that of the rectangular tube portion in the foregoing embodiment, the present invention is also applicable to terminal fittings in which the widthwise centers of resilient contact pieces and those of rectangular tube portions coincide without being deviated from each other.
(4) Although the retaining portion also has a function of preventing an excessive resilient deformation of the resilient contact piece in the foregoing embodiment, it may not have such a function according to the present invention.
(5) Although the invention has been described with reference to a female terminal fitting, it is to be understood that the invention is also applicable to a male terminal fitting.

### LIST OF REFERENCE NUMERALS

- T ...: terminal fitting
- 10 ...: rectangular tube portion
- 12 ...: bottom plate (plate portion or surface)
- 12S ...: end surface
- 14 ...: ceiling plate (plate portion)
- 19 ...: locking hole
- 22 ...: retaining portion
- 25 ...: resilient contact piece
- 50 ...: connector housing
- 51 ...: cavity
- 52 ...: locking portion
- 54 ...: tab

## Claims

1. A terminal fitting (T) to be at least partly inserted into a cavity (51) of a connector housing (50) so as to be held therein by an engagement with a locking portion (52) thereof, comprising
a tube portion (10), and
a locking hole (19) formed in a surface (12) of the tube portion (10), an opening edge (12S) of the locking hole (19) serving as a retaining portion (22) to be engaged with the locking portion (52), **characterised in that**
the retaining portion (22) is formed by deforming the opening edge (12S) of the locking hole (19) formed in the surface (12) such that at least part of an end surface (12S) of the surface (12) serving as the opening edge (12S) of the locking hole (19) is displaced inwardly of the tube portion (10).

2. A terminal fitting according to claim 1, wherein the at least part of an end surface (12S) of the surface (12) serving as the opening edge (12S) of the locking hole (19) is held faced substantially in such a direction as to be opposed to the locking portion (52).

3. A terminal fitting according to one or more of the preceding claims, wherein:
at least one resilient contact piece (25) is at least partly accommodated in the tube portion (10), and
the resilient contact piece (25) can come substantially into contact with the retaining portion (22) to prevent an excessive deformation of the resilient contact piece (25) close to or beyond a resiliency limit preferably if a degree of resilient deformation of the resilient contact piece (25) becomes larger than the one when the resilient contact piece (25) is held in contact with a tab (54).

4. A terminal fitting according to claim 3, wherein the tab (54) is to be resiliently held between the resilient contact piece (25) and a surface (14) of the tube portion (10) substantially opposite to the surface (12) formed with the locking hole (19).

5. A terminal fitting according to claim 3 or 4, wherein the widthwise center of the resilient contact piece (25) substantially coincides with that of the retaining portion (22).

6. A terminal fitting according to one or more of the preceding claims 3 to 5, wherein one or more, preferably a pair of locking plates (15F; 15R) are provided on a surface (14) of the tube portion (10) so as to act as a displacement preventing portion for avoiding a displacement of the resilient contact portion (25) in a direction at an angle different from 0° or 180°, preferably substantially normal to the deforming direction when coming into contact with the tab (54).

7. A terminal fitting according to one or more of the preceding claims 3 to 6, wherein the widthwise center of resilient contact piece (25) is deviated from that of the tube portion (10).

8. A terminal fitting according to one or more of the preceding claims, wherein an area (13R) of the tube portion (10) adjacent and substantially corresponding to the locking hole (19) is embossed or bent to project inward thereby forming an intrusion restricting portion (21) being preferably located at least partly within the opening area of the locking hole (19).

9. A terminal fitting according to claim 8, wherein the intrusion restricting portion (21) is located outside a deformation space for the resilient contact piece (25) with respect to width direction.

10. A method of forming a terminal fitting (T) which is to be at least partly inserted into a cavity (51) of a connector housing (50) so as to be held therein by an engagement with a locking portion (52) thereof, comprising the following steps:
stamping or cutting out a plate material (Ta) into a specified shape such that a locking hole (19) is formed in a surface (12) of a tube portion (10), an opening edge (12S) of the locking hole (19) serving as a retaining portion (22) to be engaged with the locking portion (52), **characterised in that**
the retaining portion (22) is formed by deforming the opening edge (12S) of the locking hole (19) formed in the surface (12) such that at least part of an end surface (12S) of the surface (12) serving as the opening edge (12S) of the locking hole (19) is displaced inwardly of the tube portion (10).

## Patentansprüche

1. Anschlußkontakt bzw. -paßstück (T), um wenigstens teilweise in einen Hohlraum (51) eines Verbindergehäuses (50) eingesetzt zu sein bzw. zu werden, um darin durch einen Eingriff mit einem verriegelnden bzw. Verriegelungsabschnitt (52) davon gehalten zu sein, umfassend einen Rohrabschnitt (10), und
ein verriegelndes bzw. Verriegelungsloch (19), welches in einer Oberfläche (12) des Rohrabschnitts (10) ausgebildet ist, wobei ein Öffnungsrand bzw. eine Öffnungskante (12S) des verriegelnden Lochs (19) als ein rückhaltender bzw. Rückhalteabschnitt (22) dient, um mit dem verriegelnden Abschnitt (52) in Eingriff gebracht zu werden, **dadurch gekennzeichnet, daß**
der rückhaltende Abschnitt (22) durch ein Deformieren der Öffnungskante (12S) des verriegelnden Lochs (19), welches in der Oberfläche (12) ausgebildet ist, derart ausgebildet ist, daß wenigstens ein Teil einer Endoberfläche (12S) der Oberfläche (12), welches als die Öffnungskante (12S) des verriegelnden Lochs (19) dient, nach einwärts des Rohrabschnitts (10) verschoben bzw. verlagert ist.

2. Anschlußkontakt nach Anspruch 1, wobei das wenigstens eine Teil einer Endoberfläche (12S) der Oberfläche (12), welches als die Öffnungskante (12S) des verriegelnden Lochs (19) dient, im wesentlichen in einer derartigen Richtung gerichtet gehalten ist, um dem verriegelnden Abschnitt (52) gegenüberzuliegen.

3. Anschlußkontakt nach einem oder mehreren der vorangehenden Ansprüche, wobei:
wenigstens ein rückstellfähiges Kontaktstück (25) wenigstens teilweise in dem Rohrabschnitt (10) aufgenommen ist, und
das rückstellfähige Kontaktstück (25) im wesentlichen in Kontakt mit dem rückhaltenden Abschnitt (22) gelangen kann, um eine übermäßige Deformation des rückstellfähigen Kontaktstücks (25) nahe zu einer oder über eine Rückstellfähigkeitsgrenze hinaus vorzugsweise zu verhindern, wenn ein Grad einer rückstellfähigen Deformation des rückstellfähigen Kontaktstücks (25) größer als derjenige wird, wenn das rückstellfähige Kontaktstück (25) in Kontakt mit einem Flachstecker bzw. Dorn (54) gehalten ist.

4. Anschlußkontakt nach Anspruch 3, wobei der Flachstecker (54) rückstellfähig zwischen dem rückstellfähigen Kontaktstück (25) und einer Oberfläche (14) des Rohrabschnitts (10) im wesentlichen gegenüberliegend der Oberfläche (12) zu halten ist, welche mit dem verriegelnden Loch (19) ausgebildet ist.

5. Anschlußkontakt nach Anspruch 3 oder 4, wobei das Zentrum in Breitenrichtung des rückstellfähigen Kontaktstücks (25) im wesentlichen mit demjenigen des rückhaltenden Abschnitts (22) zusammenfällt.

6. Anschlußkontakt nach einem oder mehreren der vorangehenden Ansprüche 3 bis 5, wobei eine oder mehrere, vorzugsweise ein Paar von verriegelnden Platten (15F; 15R) an einer Oberfläche (14) des Rohrabschnitts (10) vorgesehen bzw. zur Verfügung gestellt ist bzw. sind, um als ein eine Verlagerung verhindernder Abschnitt für ein Vermeiden einer Verlagerung des rückstellfähigen Kontaktstücks (25) in einer Richtung unter einem von 0° ° oder 180° verschiedenen Winkel, vorzugsweise im wesentlichen normal auf die deformierende Richtung zu wirken, wenn er in Kontakt mit dem Flachstecker (54) gelangt.

7. Anschlußkontakt nach einem oder mehreren der vorangehenden Ansprüche 3 bis 6, wobei das Zentrum in Breitenrichtung des rückstellfähigen Kontaktstücks (25) von demjenigen des Rohrabschnitts (10) abweicht.

8. Anschlußkontakt nach einem oder mehreren der vorangehenden Ansprüche, wobei ein Bereich bzw. eine Fläche (13R) des Rohrabschnitts (10) benachbart und im wesentlichen entsprechend dem verriegelnden Loch (19) geprägt oder gebogen ist, um nach innen vorzuragen, wodurch ein ein Eindringen beschränkender Abschnitt (21) gebildet ist bzw. wird, welcher vorzugsweise wenigstens teilweise innerhalb des Öffnungsbereichs bzw. der Öffnungsfläche des verriegelnden Lochs (19) angeordnet ist.

9. Anschlußkontakt nach Anspruch 8, wobei der ein Eindringen beschränkende Abschnitt (21) außerhalb eines Deformations- bzw. Verformungsraums für das rückstellfähige Kontaktstück (25) in bezug auf eine Breitenrichtung angeordnet ist.

10. Verfahren zum Ausbilden bzw. Herstellen eines Anschlußkontakts (T), welcher wenigstens teilweise in einen Hohlraum (51) eines Verbindergehäuses (50) einzusetzen ist, um darin durch einen Eingriff mit einem verriegelnden bzw. Verriegelungsabschnitt (52) davon gehalten zu werden, umfassend die folgenden Schritte:
Stanzen oder Ausschneiden eines Plattenmaterials (Ta) in eine bestimmte Form bzw. Gestalt, so daß ein verriegelndes bzw. Verriegelungsloch (19) in einer Oberfläche (12) eines Rohrabschnitts (10) ausgebildet wird, wobei ein Öffnungsrand bzw. eine Öffnungskante (12S) des verriegelnden Lochs (19) als ein rückhaltender bzw. Rückhalteabschnitt (22) dient, um mit dem verriegelnden Abschnitt (52) in Eingriff gebracht zu werden, **dadurch gekennzeichnet, daß**
der rückhaltende Abschnitt (22) durch ein Deformieren der Öffnungskante (12S) des verriegelnden Lochs (19), welches in der Oberfläche (12) ausgebildet wird, derart ausgebildet wird, daß wenigstens ein Teil einer Endoberfläche (12S) der Oberfläche (12), welches als die Öffnungskante (12S) des verriegelnden Lochs (19) dient, nach einwärts des Rohrabschnitts (10) verschoben bzw. verlagert wird.

## Revendications

1. Armature de borne (T) à insérer au moins en partie dans une cavité (51) d'un boîtier de connecteur (50) de façon à y être retenue par enclenchement avec une partie de verrouillage (52) de celui-ci, comprenant :
une partie tubulaire (10), et
un trou de verrouillage (19) formé dans une surface (12) de la partie tubulaire (10), un bord d'ouverture (12S) du trou de verrouillage (19) servant de partie de retenue (22) qui vient en prise avec la partie de verrouillage (52),
**caractérisée en ce que**
la partie de retenue (22) est créée par déformation du bord d'ouverture (12S) du trou de verrouillage (19) ménagé dans la surface (12) de sorte qu'au moins une partie d'une surface d'extrémité (12S) de la surface (12) servant de bord d'ouverture (12S) du trou de verrouillage (19) est déplacée vers l'intérieur de la partie tubulaire (10).

2. Armature de borne selon la revendication 1, dans laquelle la dite au moins une partie d'une surface d'extrémité (12S) de la surface (12) servant de bord d'ouverture (12S) du trou de verrouillage (19) est maintenue tournée sensiblement dans une direction telle qu'elle est opposée à la partie de verrouillage (52).

3. Armature de borne selon une ou plusieurs des revendications précédentes, dans laquelle :
au moins une pièce de contact élastique (25) est au moins en partie logée dans la partie tubulaire (10), et
la pièce de contact élastique (25) peut venir sensiblement en contact avec la partie de retenue (22) pour empêcher une déformation excessive de la pièce de contact élastique (25) près ou au-delà d'une limite élastique de préférence si un degré de déformation élastique de la pièce de contact élastique (25) devient plus grand que celui qui existe lorsque la pièce de contact élastique (25) est tenue en contact avec une broche (54).

4. Armature de borne selon la revendication 3, dans laquelle la broche (54) doit être tenue élastiquement entre la pièce de contact élastique (25) et une surface (14) de la partie tubulaire (10) sensiblement en face de la surface (12) comportant le trou de verrouillage (19).

5. Armature de borne selon la revendication 3 ou 4, dans laquelle le centre dans le sens de la largeur de la pièce de contact élastique (25) coïncide sensiblement avec celui de la partie de retenue (22).

6. Armature de borne selon une ou plusieurs des revendications précédentes 3 à 5, dans laquelle une ou plusieurs et de préférence deux plaques de verrouillage (15F, 15R) sont prévues sur une surface (14) de la partie tubulaire (10) de façon à agir comme une partie empêchant le déplacement, afin d'éviter un déplacement de la partie de contact élastique (25) dans une direction suivant un angle différent de 0 degré ou de 180 degrés et de préférence sensiblement perpendiculaire à la direction de déformation lorsqu'elle vient en contact avec la broche (54).

7. Armature de borne selon une ou plusieurs des revendications précédentes 3 à 6, dans laquelle le centre dans le sens de la largeur de la pièce de contact élastique (25) est décalé de celui de la partie tubulaire (10).

8. Armature de borne selon une ou plusieurs des revendications précédentes, dans laquelle une région (13R) de la partie tubulaire (10) adjacente et correspondant sensiblement au trou de verrouillage (19) est gaufrée ou pliée de manière à faire saillie vers l'intérieur, formant ainsi une partie d'étranglement intrusive (21) située de préférence au moins partiellement à l'intérieur de la région d'ouverture du trou de verrouillage (19)

9. Armature de borne selon la revendication 8, dans laquelle la partie d'étranglement intrusive (21) est située à l'extérieur d'un espace de déformation pour la pièce de contact élastique (25) avec référence à la direction de largeur.

10. Procédé de fabrication d'une armature de borne (T) qui doit être au moins en partie insérée dans une cavité (51) d'un boîtier de connecteur (50) de façon à y être retenue par enclenchement avec une partie de verrouillage (52) de celui-ci, comprenant les étapes suivantes :
estampage ou découpe d'un matériau en plaque (Ta) dans une forme spécifiée de sorte qu'un trou de verrouillage (19) soit formé dans une surface (12) d'une partie tubulaire (10), un bord d'ouverture (12S) du trou de verrouillage (19) servant de partie de retenue (22) venant en prise avec la partie de verrouillage (52),
**caractérisé en ce que** la partie de retenue (22) est créée par déformation du bord d'ouverture (12S) du trou de verrouillage (19) ménagé dans la surface (12), de sorte qu'au moins une partie d'une surface d'extrémité (12S) de la surface (12) constituant le bord d'ouverture (12S) du trou de verrouillage (19) soit déplacée vers l'intérieur de la partie tubulaire (10).
